(19) Europäisches Patentamt

European Patent Office

Office européen des brevets

(11) **EP 1 335 554 A2**

(12) **EUROPEAN PATENT APPLICATION**

(43) Date of publication:
**13.08.2003 Bulletin 2003/33**

(51) Int Cl.$^7$: **H04L 27/26**

(21) Application number: **03000465.9**

(22) Date of filing: **11.01.2003**

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **28.01.2002 IT TO20020076**

(71) Applicant: **RAI RADIOTELEVISIONE ITALIANA (S.p.A.)**
**00195 Roma (IT)**

(72) Inventors:
• **Mignone, Vittoria**
**10040 Piobesi Torinese (Torino) (IT)**

• **Romano, Daniele**
**10147 Torino (IT)**
• **Sacco, Bruno**
**10154 Torino (IT)**
• **Ripamonti, Silvio**
**10090 Castiglione Torinese (Torino) (IT)**

(74) Representative: **Spandonari, Carlo, Dr. Ing.**
**Spandonari & Modiano s.r.l.**
**corso Duca degli Abruzzi 16**
**10129 Torino (IT)**

(54) **Cancellation of reentry-signals relay stations for DVB-T networks**

(57) The amplification chain in a relay station is provided with negative feedback by a FIR filter with controllable frequency response ($W(f)$), whereby the channel transfer function for each OFDM symbol is estimated and the filter transfer function is controlled so that the distorsions of the signal broadcast by the transmitting antenna are minimized. A preliminary procedure is then performed in which the relay's transmission is disabled while the reception is active and an estimation is made of the transfer function of the multiple paths reaching the receiver in addition to the main signal by computing $H_e(f) = F_0(f) - 1$, where $F_0(f)$ is the frequency response of the channel, and the FIR filter is then initialized with the function $W_0(f) = F_0(f) - 1$. The invention also concerns an apparatus with a simplified FIR filter.

Figura 3

EP 1 335 554 A2

**Description**

Disclosure

This invention is concerned with a process for cancelling the signal fed back by the radiating antenna to the antenna receiving the signal to be re-irradiated, in a gapfiller-type relay station for single-frequency, DVB-T television broadcasting networks, and is also concerned with an apparatus for implementing the process effectively and cheaply.

The television boradcasting system known as DVB-T (Digital Video Broadcasting - Terrestrial), according to the European standard ETS 300 744, *"Digital broadcasting system for television, sound and data services; Framing structure, channel coding and modulation for digital terrestrial television"* (for simplicity denoted by the acronym DVB-T in the specification below), is characterized by the ability to operate in single-frequency networks, where all the transmitters radiate the same signal on the same channel frequency. Because of the peculiar structure of the transmitted signal, C-OFDM (Coded Orthogonal Frequency Division Multiplex) (cfr. S.B. Weinstein, P.M. Ebert, *Data Transmission by Frequency-Division Multiplexing using the Discrete Fourier Transform,* IEEE Transactions on Communications, COM-19(5), pp. 628-634, October 1971), the receivers will be able to properly demodulate the received signal, provided that the delays of the signals coming from different transmitters are shorter than the so-called guard interval.

The DVB-T broadcasting network will comprise a number of main transmitters servicing the larger areas, and a number of so-called "gap filler" relay stations, whose task is to fill-in the service gaps caused by special reliefs in the territory (mountains or hills shielding portions of the serviced area). These relay stations are usually fed with the signal received by a main transmitter, which is amplified and irradiated to the serviced area.

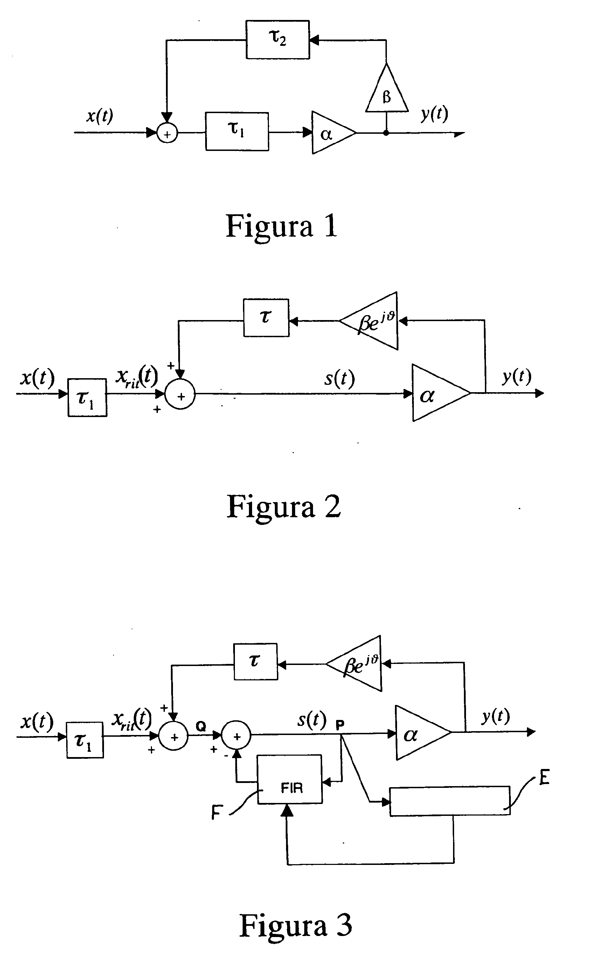

Since the relay station irradiates the signal at the same frequency at which it was received, there usually are serious problems due to coupling between the received signal and the transmitted signal. The performance of the relay station is schematically shown in the simplified block diagram of Figure 1, where $x(t)$ is the signal coming from the main transmitter, $y(t)$ is the signal irradiated by the relay station, blocks $\tau_1$ and $\alpha$ are the propagation delay and the amplification across the relay station installation, respectively, while blocks $\tau_2$ and $\beta$, respectively are the propagation delay and the amplification (actually attenuation) in the coupling of the transmitting antenna with the receiving antenna in the relay station, $S_1$ is an adder representing the superposition of $x(t)$ with the coupled noise signal, i.e. the reentry signal. From Figure 1 it is deduced that, where the amplification $\alpha$ is high enough, the overall gain of the loop may become unitary, thereby triggering instabilities and oscillations. This circumstance makes it necessary to limit the relay station's amplification to a safe level, thereby reducing the effectiveness of the relay station.

In order to decouple the two antennas (receiving and transmitting) insofar as possible, the attempt is usually made to separate the antennas from each other geographically, and also to take advantage of any natural obstacles (such as mountain cliffs) as well as of the antennas' radiation pattern. However, these approaches do not lead to very high amplification levels $\alpha$.

In Hamamuzi, Iamamura, Iai, Shibuya, Sasaki, *"A Loop interference Canceller for the relay Stations in a Single Frequency Network for Digital Terrestrial Broadcasting*", NHK Laboratories Note, November 2000, a scheme has been proposed for calcelling the reentry signal to the receiving antenna in the gap filler, for the Japanese system ISDB-T, based on an OFDM system.

The canceller of Hamamuzi et al. operates according to the diagram of Figure 2, which is a block diagram similar to the diagram of Figure 1, and carrying, where possible, the same references. The canceller is based on negative-feedback loop, comprising a digital filter connected in feedback to the input path of the relay station, and whose frequency response $W(f)$ is driven to compensate distorsions caused by the reentry signal, by monitoring the signal at an estimation point. The digital filter proposed by Hamamuzi et al. for use as a canceller is a conventional FIR filter as known in the art. The cancellation system of Hamamuzi et al. is described below in more detail.

In the system proposed by Hamamuzi et al. it is assumed that the incoming signal to the relay station is free from echoes; however, when multiple-path distorsions of the signal coming from the network are present (usual condition), the method of estimation proposed, which is unable to discriminate the distorsions made to the reentry signal from those that are already existing in the original signal, turns out to be inefficient in the transient period, as it prevents the system from achieving stability of operation, as will become more evident from the disclosure below.

Moreover, also as will be apparent below, the canceller FIR filter in the system of Hamamuzi et al. should have a number of taps proportional to the maximum delay $\tau_1+\tau_2$ introduced by the relay station loop. More particularly, if $f_c$ is the system's sampling frequency, the number of taps in the FIR filter should be at least $f_c - (\tau_1+\tau_2)$. This implies the requirement that quite complex and consequently expensive cancelling filters are used (e.g., in order to be able to cancel reentry signals with delays up to 30 $\mu$s, a FIR filter with about 280 taps is necessary, $f_c$ being 64/7 MHz in the DVB-T system).

It is therefore the main object of the invention to improve the above mentioned process for cancelling the reentry signal in a gap-filler type relay station for single-frequency DVB-T networks, which allows the system to operate even when the signal received by the relay station contains echoes.

Another object of the invention is to simplify the implementation of the cancelling filter of the reentry signal in a relay device for single-frequency DVB-T networks.

The invention achieves the above and other objects and advantages, such as will appear from the following specification, by a process for cancelling echoes in a DVB-T signal before transmission by a single-frequency relay station, having the features recited on claim 1.

The invention also contemplates a transceiver apparatus incorporating the principles of the above process, as recited in claim 8.

The invention will now be described in detail in a few preferred embodiments, given by way of non limiting example, with reference to the attached drawings, wherein:

Figure 1 is a simplified block diagram showing the performance of a conventional gap-filler relay station;

Figure 2 is a simplified block diagram showing the application of an apparatus for cancelling the reentry signal to the relay station of Figure 1;

Figure 3 is a block diagram equivalent to the diagram of Figure 2;

Figure 4 is a block diagram of a FIR filter in the real domain;

Figure 5 is a block diagram of a FIR filter in the complex domain;

Figure 6 is a block diagram of a preferred embodiment of a simplified digital filter according to the invention; and

Figure 7 is a block diagram of a preferred embodiment of a variable-delay delaying device used in the digital filter of Figure 6.

With reference to Figure 1 as already mentioned, signal $S(f)$ in the frequency domain at point P may be expressed as

$$S(f) = X(f)e^{-j2\pi f\tau_1} + S(f)\alpha C_0(f)e^{-j2\pi f\tau_1} - S(f)W(f)$$

where function $C_0(f)$ represents the coupling between the output and the input of the gap filler, i.e.

$$C_0(f) = \beta e^{-j(2\pi f\tau_2-\theta)}$$

The diagram of Figure 1 may be transformed into the equivalent model of Figure 2, where delaying block $\tau_1$ has been moved from downstream to upstream of adder S1, and with reference to the former, after defining the overall delay $\tau = \tau_1 + \tau_2$ and setting:

$$C(f) = C_0(f)e_1^{-j2\pi f\tau} = \beta e^{-j(2\pi f\tau-\theta)}$$

the following expression is finally obtained:

$$S(f) = \frac{X(f)e^{-j2\pi f\tau_1}}{1 - [\alpha C(f) - W(f)]}$$

Accordingly, with reference to the equivalent model of Figure 2, the transfer function $F(f)$ of the signal existing at point P (estimation point) with respect to the input signal to the delayed relay station $X_{rit}(f) = X(f) e^{-j2\pi f\tau_1}$ takes the form shown in the following equation (1):

$$F(f) = \frac{S(f)}{X_{rit}(f)} = \frac{1}{1 - [\alpha C(f) - W(f)]} \tag{1}$$

By considering the expression of $F(f)$, which represents the channel transfer function, it can be seen that it is possible to cancel the interference due to coupling $C(f)$ by constraining the signal in the estimation point P to be equal to the delayed input signal $X_{rit}(f)$; in the frequency domain, this condition is expressed by the constraint $F(f) \equiv 1$; after substituting this in equation (1), the expression $W(f) = \alpha C(f)$ is obtained, which describes the frequency response of the filter constituting the canceller.

By defining the following function as frequency error function

$$Er(f) = \alpha C(f) - W(f),$$

and by substituting in expression (1), one obtains

$$Er(f) = 1 - 1/F(f) \qquad (2.1)$$

or similarly in the discrete time-frequency domain $(n,k)$ ($n$ is the index of the OFDM symbol, $k$ is the index of the carriers in the OFDM symbol, $k_{min} \leq k \leq k_{max}$), where the methods commonly used for estimating the channel transfer function in DVB-T systems hold

$$Er(n,k) = 1 - 1/F(n,k) \qquad (2.2)$$

Figure 3 shows a block diagram of the system, where E is a FIR cancelling filter F using the error function Er to implement an adaptive cancelling process, and E is an evaluating device for the channel transfer function in an estimation point P of the relay station.

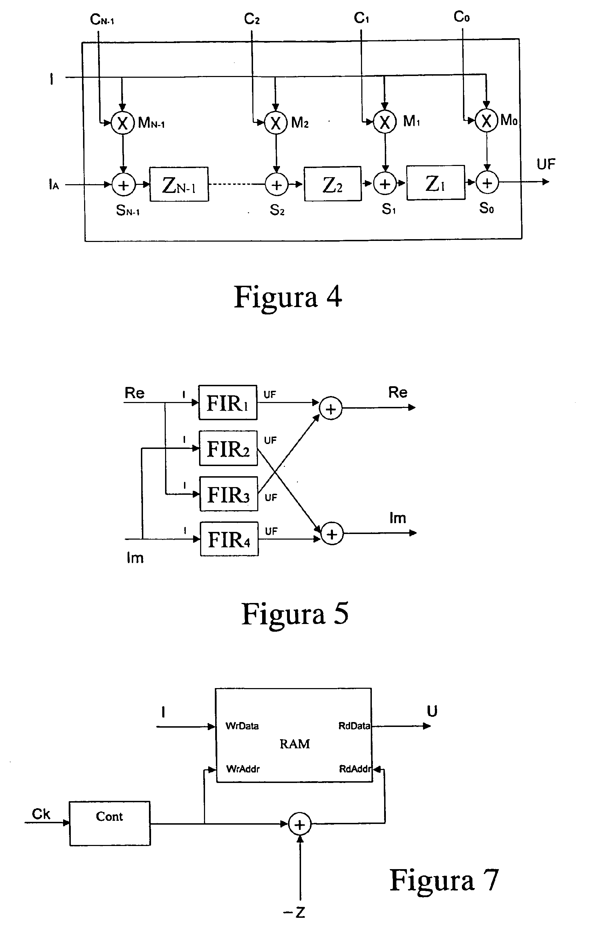

Figure 4 shows one of the classic structures for the FIR filter. The transposed FIR filter, well known to persons skilled in the art, comprises a chain of unitary delaying devices $Z_1, Z_2, ..., Z_{N-1}$, alternating with $N$ adders $S_0, S_1, ..., S_{N-1}$, and also comprises moltipliers $M_0, M_1, ..., M_{N-1}$, which multiply the input $I$ of the FIR filter by respective coefficients $c_0, c_1, ..., c_{N-1}$, which are applied to the filter as control inputs, while the outputs of the multipliers are added to the respective outputs of the delaying devices in the respective adders listed above. The auxiliary input signal $I_A$ of the last adder $S_N$ is, as a rule, null. Input signal $I$, sampled and quantized on $m$ bits (for instance $m = 12$), propagates at the clock rate along the chain of delaying devices, and the sum of the samples stored in the several delaying devices, weighted according to coefficients $c_0... c_{N-1}$, is generated at the output UF (filtered output) at each clock tick.

The adaptive cancellation process should therefore comprise the following steps:

1. Inizialization: the canceller is not active, and therefore $W(n_0,k) = 0$, where $n_0$ is the index of the first symbol considered. The channel transfer function $F(n_0,k)$ is evaluated (by known methods) from signal $s(t)$ to the estimation point; the filter's transfer function is constrained as

$$W(n_0,k) = Er(n_0,k) = 1 - 1/F(n_0,k)$$

where, as above, $n_0$ is the index of the OFDM symbol, $k$ is the index of the carriers within the OFDM symbol. The impulse response of the cancelling filter is then determined by the Inverse Fourier transform IFFT (Inverse Fast Fourier Transform):

$$er(n_0,i) = IFFT[Er(n_0,k)] - r(i)$$

where

$$r(i) = \begin{cases} 1 & \text{if } 0 < i \leq N - 1 \\ 0 & \text{elsewhere} \end{cases}$$

$N$ being equal to the number of taps in the FIR filter that is to be used, and chosen on the basis of the duration of the maximum echo that it is desired to cancel.

2. At next symbol $n_0 + 1$, the canceller is allowed to operate using the filter evaluated at the previous step.

3. After a transient has elapsed at least equal to the number $m$ of OFDM symbols necessary to the algorithm used for estimating the transfer function of the channel, at symbol $n_1$ (where preferably $n_1 \geq n_0+m$) a new estimation of function $F(n,k)$ is made, this function providing, through equation $Er(n_1,k) = 1 - 1/F(n_1,k)$, the value of the residual error due to the feedback loop. This error is used to update the frequency response of cancelling filter $W(f)$ according to the following formula

$$W(n_1,k) = W(n_0,k) + \mu \cdot Er(n_1,k)$$

where the coefficient $\mu \leq 1$ has the purpose of time-averaging any noise which might exist in the input signal to the gap-filler. Similarly, in the time domain the coefficients $c;$ are obtained to be applied to the multipliers of the FIR filter

$$c_i = w(n_1,i) = w(n_0,i) + \mu \cdot r(i) \cdot er(n_1,i) \qquad \text{with } i = 0, ..., N - 1$$

4. The canceller is then applied to symbol $n_1+1$, i.e. the error is re-computed after the $m$ symbols required for the estimation of the channel, and the filter is again updated. The general esxpression at symbol $n_i$ is:

$$W(n_i,k) = W(n_{i-1},k) + \mu \cdot Er(n_i,k)$$

$$w(n_i,i) = w(n_i\text{-}1,i) + \mu \cdot r(i) \cdot er(n_i,i) \qquad \text{with } i = 0,..., N\text{-}1 \tag{4}$$

and the coefficients $c_i$ to be applied to the multipliers of filter FIR are now $c_i = w(n_i,i)$ with $i = 0, ..., N\text{-}1$.

The above procedure causes cancellation of the echo due to the coupling and if necessary its tracking, provided that the dynamics of its change is slow with respect to the times required for the estimation of $F(f)$.

The evaluation of the transfer function of the channel at the estimation point $F(f)$ is estimated by methods known to persons skilled in the art, as commonly implemented in receivers of DVB-T signals, by processing the received pilot signals, according to techniques given, e.g. in V. Mignone, A. Morello, M. Visintin, "*CD3-OFDM, a new channel estimation method to improve the spectrum efficiency in digital terrestrial television systems*", IBC'95 Conference, Amsterdam. These methods use the information received in $m$ consecutive OFDM symbols (minimum 4) for estimating $F(f)$. The method for estimating the cancellation function should abide by this requirement in estimating $F(f)$.

In pratice, evaluation device E of Figure 3 generates multiplication coefficients to be applied to the multipliers of the above described FIR filter, as a person skilled in the art will readily understand.

However, the multipliers perform the product of two factors expressed upon $m$ bits, the result being expressed on $2*m$ bits. If filter FIR has a substantial length (at least $N = 250$, as in the implementation proposed by Hamamuzi et al.) the circuit becomes quite complex. Moreover, the implemented filter has to operate on complex samples, and consequently, as known to persons skilled in the art, it should be implemented with four real FIRs and two adders, as shown in Figure 5, where four real FIRs are marked as FIR1, FIR2, FIR3 and FIR4. Moreover, because of the clock rates involved, it is not possible to choose a "serial" approach, where the same hardware is used repeatedly at the cost of a higher clock. For all the above reasons, the filter FIR required for implementing the cancellation method of Hamamuzi et al. is extremely expensive.

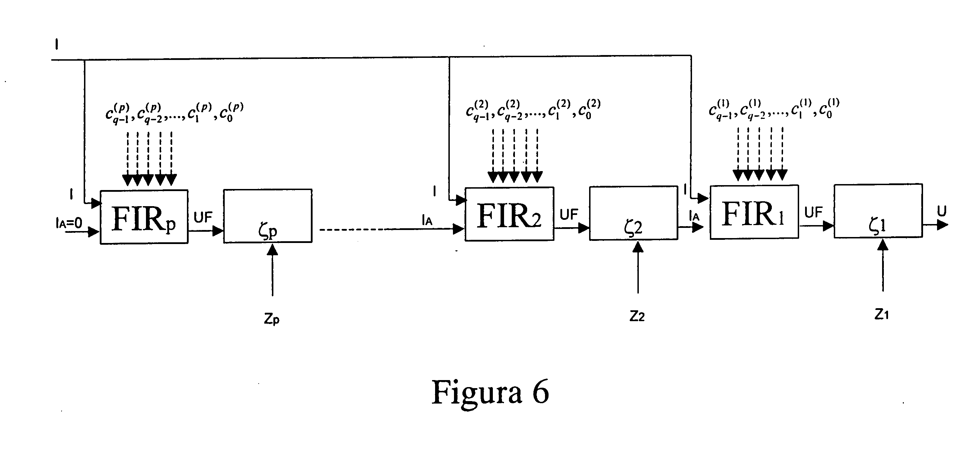

After the above detailed analysis of the limits of the prior art, a few preferred embodiments of the inventive process will be described below, as well as of the inventive apparatus, with reference to Figures 6-7.

The method ov the invention provides that at the time of turning on the gap-filler the following procedure is followed. In a preliminary step (identified below with subscript 0) the receiving side of the gap-filler is turned on, while the transmitting side is off. Therefore, there is no reentry due to the coupling of the antennas, and the only existing echoes are caused by the network.

It is therefore possible, from the signal picked at the estimation point, to evaluate the channel frequency response $F_0(f)$, which, if the noise and the estimation erros are neglected, takes the following expression:

$$F_0(f) = 1 + H_e(f)$$

where $H_e(f)$ represents the set of echoes superposed to the main signal received.

The estimation of the transfer function of the multiple paths reaching the receiver in addition to the main signal is obtained by simply subtracting 1 from the estimated function

$$H_e(f) = F_0(f) - 1$$

The invention provides that distorsions due to the network echoes are cancelled before the gap-filler transmitter is turned on, by initializing cancelling filter FIR by function $W_0(f) = F_0(f) - 1$, or, in the discrete time-frequency domain, $W(n_0,k) = F(n_0,k) - 1$. The invention therefore provides that the taps of the FIR filter $w(n,i)$ are initialized with the samples of the IFFT of the estimated function $W(n,k)$ and that the canceller is turned on, without turning on the relay's transmitting side yet.

In order to attenuate the noise components existing at the input of the device, and in order to consider any error in the evaluation of $F_0(f)$, an iterative process may be used which takes advantage of the same estiamtion chain described above, with the following difference: the block which evaluates the frequency error by performing the operation $1 - 1/F(f)$ is replaced, in the initial step when the relay's transmitter is off, by a new block, which computes the error at the generic step i as

$$Er_0(f) = F_0(f) - 1$$

or, in the discrete domain

$$Er_0(n_i,k) = F_0(n_{i-1},k)-1.$$

The above error is used to update the filter coefficients by equation (4).

By the above procedure, the estimation of network echoes is uteratively refined; the preliminary step ends after a predetermined number of OFDM symbols (say 100) or when the iterative process attains the result that the maximum of function $|Er(f)|$ is below a given threshold (for instance, equal to the value $20Log_{10}(max_f\{|Er(f)|\}) = -30dB$): at this time, the filter taps contain the values required for cancelling the additive echoes. The gap-filler transmitter is then turned on, and the estimation chain described in the paragraph above is put to service, with the advantage that, when the relay station begins to transmit, the signal is purified of additive echoes. By following this procedure, the system succeeds in cancelling both the network echoes and the gap-filler echo, and, if the variations are slow with respect to the estimation times, it can track them.

In order to spare the canceller any problems of high dynamics, the invention also provides that the transmitter may also be turned on by means of a "turning-on ramp", i.e. by letting the amplification $\alpha$ increase from 0 to its rated value over a sufficiently large number of symbols (say 100). As discussed above, the channel transfer function is estimated by known methods, as commonly implemented in DVB-T receivers. In pratice, one may conceive of incorporating a DVB-T receiver into the estimation chain of Figure 4. As known to persons skilled in the art, it is easy to attain a condition of correct synchronization (called CCS below) of such a receiver within the receiver itself. Since any malfunction of the gap-filler, because of the system's feedback, might lead the system to an oscillatory condition, the invention provides that the proper operation of the system is constantly checked by monitoring the CCS of the receiver within the estimation chain. In case of malfunction, it will be necessary to turn off the gap-filler transmitter and restart the initial step of cancellation of the network echoes.

Actually, if one considers that the estimation chain introduces an error into the evaluation of the frequency response of the channel and that the FFT process, operating on digital strings, introduces a border effect, the error function in the time domain also exhibits a Sinc at the origin, which appears even where echoes are absent. Although its amplitude is attenuated, it is preferable to remove it, say by setting the first few filter taps at zero value. This generally does not present a problem, because the delays usually are longer than 1 μs.

The invention also concerns a method for simplifying the structure of the canceller, on the basis of the circumstance that the signal to be cancelled will usually comprise a limited number of echoes. If such echoes can be identified, the cancelling filter can be built as a line of time-variable delays, whose structure is described below. The echo-identification algorithm is based on an iterative algorithm for searching the maxima of the error function er(t), estimated by the previous method. The algorithm is applied to each evaluation of the error function, both during the initial step of search for the network echoes and during the operating step of the relay station, by looking for the echoes of the reentry signal and then tracking the network and reentry echoes.

The error function $f_{err}(t)$ yielded by the estimation chain, when a number of echoes $N_{echoes}$ is present, is expressed by the function

$$f_{err}(t) \cong \sum_{s=1}^{N_{echoes}} A_s e^{j\theta_s} B \cdot \text{Sinc}[B \cdot (t - \tau_s)] e^{j2\pi f_c t}$$

where $A_s e^{j\theta s}$ is the complex amplitude of the s-th echo, $B$ is the bandwidth taken by the DVB-T signal (equal to about 7.61 MHz), $\tau_i$ is the time position of the i-th echo, and $f_c$ is the sampling frequency, while Sinc($x$), as known in the field, is defined as equivalent to sin($x$)/$x$.

The presence of function Sinc is due to the function $F(f)$ being estimated over a limited portion of the spectrum, equal to $B$, corresponding the the set of OFDM carriers $k$, with $k_{min} < k < k_{max}$.

An estimation of function er(t) is easily obtained from $f_{err}(t)$, i.e. by dividing by bandwidth $B$, and on the assumption of operatin on an equivalent, base-band modelL

$$er(t) \cong \sum_{s=1}^{N_{echi}} A_s e^{j\theta_s} Sinc[B \cdot (t - \tau_s)]$$

The process for locating the maxima comprises the following steps:

1. A search for the absolute maximum of the absolute value of er($t$) is carried out over a time interval equal to the delay of the longest echo that it is desired to cancel; if the maximum found has an amplitude higher than a predefined threshold, such that the echoes beneath that threshold do not affect the performance of the system (e.g., $20Log_{10}A_s$ = -20, for a DVB-T system using the coded modulation 64QAM 2/3), the presence of an echo to be cancelled is recorded (the echo's estimated position $\tau_i$ and complex amplitude $A_s e^{j\theta s}$ are stored).

2. The residue function is then evaluated:

$$res_1(t) = er(t) - A_1 e^{j\theta_1} Sinc[B \cdot (t - \tau_1)]$$

obtained by subtracting from the error function a Sinc centered in $\tau_s$ and having a complex amplitude $A_s e^{j\theta s}$, whose expression depends solely on the spectral characteristics of the OFDM signal (bandwidth $B$ is known a priori), as well as on the estimated echo.

3. In order to determine the presence of further echoes, the search for a maximum in the absolute value of function res$_1(t)$ is repeated; if the located maximum turns out to be above the threshold, the echo found is stored and the evaluation of the residue function res$_2(t)$ is carried out, by a process similar to the process of section 2. This function is again used to continue with the search for the next maximum.

4. The process ends when a maximum is found that is below the predetermined thresholkd, that echo being neglected.

5. The amplitudes estimated in the previous step are then updated: for each OFDM symbol or for each iteration $n_i$ where the error function is evaluated, for each stored s-th echo, the tap relevant to it is updated on the basis of equation (4).

It is also useful, after updating the taps, to carry out a check of their absolute values and decide that an echo has vanished if the corresponding tap has decreased below a predetermined threshold (e.g. $20Log_{10}|w(n_i,i)|$ = -25 dB); this approach prevents that the system uselessly continues to update an echo that has undergone an amplitude decrease such that it does no longer affect the performance, or that has moved from its time position. In the latter case, the algorithm detects, however, a new maximum, which is added to the set of detected echoes.

The presence of several echoes may cause an error in the evaluation of one or more maxima, due to interference of the tails on function Sinc present in function er($t$) with the tails of another function Sinc, which can generate a maximum where there is in fact no echo and change the amplitude values. This circumstance is usually solved by the algorithm automatically, because, after a few OFDM symbols have been processed, the tap concerning the non-existent echo becomes quite weak (below the second threshold previously introduced) and this is interpreted as a vanishing echo. In addition, an iterative refining process of the values $\tau_s$ and $A_s e^{j\theta s}$ can be set into action, possibly periodically (on the first estimation after turning on and each $T$ OFDM symbols), as follows. After completion of the maximum-searching step, for each i-th located echo starting from the first located echo, one can refine the amplitude estimation, by subtracting from function er($t$) the Sinc functions corresponding to the other echoes and by re-evaluating the maximum of the expression thus obtained. This procedure yields values that are purified of the presence of the other echoes.

The invention also concerns a particularly advantageous embodiment of the complex canelling filter, which is made possible by the choice of the above described algorithm for location the most significant echoes.

In the assumption that the coefficients $c_i$ of cancellation filter FIR are zero except in a few non-contiguous intervals of domain $i \in [0, ..., N\text{-}1]$, all the multipliers concerning such zero coefficients may be omitted a priori, and the structure is thereby simplified and becomes segmented.

According to the teachings of the invention, Figure 6 shows a segmented FIR filter, comprising conventional FIR filtering segments $FIR_1$, $FIR_2$, ... $FIR_p$ cascaded with alternating variable-delay delaying devices $\zeta_1$, $\zeta_2$, ... $\zeta_p$, the output of each delayer being applied to auxiliary input $I_A$ of the next FIR segment (see Figure 4), and the output UF of each FIR segment (Figure 4) being applied to the input of the next delaying device. The main inputs I of filter segments $FIR_1$, $FIR_2$, ... $FIR_p$ all receive in parallel the signal to be filtered, picked at the estimation point P of the amplification chain of the relay station (Figure 3).

To the respective filter segments $FIR_1$, $FIR_2$, ... $FIR_p$ are applied, as control signals of the frequency response, respective groups of successive, non-zero coefficients $c_i$, that are associated to each of the located significant echoes, computed as described below. Each delaying device is controlled by a respective command $Z_1$, $Z_2$, ... $Z_p$, that also is computed as described below.

As discussed above, the process of search for the maxima controls the coefficients $w_i$ of the elementary FIR filters to a predetermined number $q$ of taps (say $q = 9$) and the values $\zeta_1 ... \zeta_p$ of the delays, expressed in ascending order. Each pf the Fir filters is therefore associated with a different maximum, the coefficient $c_{\llcorner q/2}$ of the central multiplier being updated according to the error function (4) at the position of the maximum, and the remaining taps according to the same function in the corresponding positions, i.e.:

$$c^s_i = w\left(n, i - \left\lfloor \frac{q}{2} \right\rfloor + n_s\right) \qquad \text{for } i = 0, ..., q\text{-}1 \text{ and } s = 1, ..., p$$

$$\zeta_s = n_s - \left\lfloor \frac{q}{2} \right\rfloor - 1 - \left[(s-1)\cdot q + \sum_{i=1}^{s-1} \zeta_i\right] \qquad \text{for } s = 1, ..., p$$

Accordingly, as a person skilled in the art will appreciate, it follows that the control signals for the delaying devices of the filter of Figure 6 shall be:

$$\zeta_1 = n_1 - \left\lfloor \frac{q}{2} \right\rfloor - 1$$

$$\zeta_2 = n_2 - \left\lfloor \frac{q}{2} \right\rfloor - 1 - [q + \zeta_1]$$

$$\zeta_3 = n_3 - \left\lfloor \frac{q}{2} \right\rfloor - 1 - [2 \cdot q + \zeta_1 + \zeta_2]$$

...

$$\zeta_p = n_p - \left\lfloor \frac{q}{2} \right\rfloor - 1 - \left[ (p-1) \cdot q + \sum_{i=1}^{p-1} \zeta_i \right]$$

where $f_c$ is the sampling frequency of the system, $n_s$ = integer nearest to $(\tau_s \cdot f_c)$ is equal to the number of samples corresponding to delay $\tau_s$, and $\lfloor x \rfloor$ is the integer part of $x$.

It appears that, if the overall length of the segmented FIR filter is set to $N$ = 250, or other high value, the complexity, being mainly due to the multipliers, may be kept low, provided that only small elementary FIRs are accepted, in a small number $p$.

Similarly, the values of the delays shall be set to comply with the time lags between the maxima. In the extreme case, the FIR filters may comprise one tap only, which would then be set at the maximum value and updated according to expression (4).

Figure 7 shows a preferred embodiment of a variable-delay delaying device. A random-access memory RAM, of the type having two data ports ("Dual Port"), is provided, on one hand, with a first data port WrData, controlled for writing only, and acting as input to the delaying device, with a first address input WrAddr associated to it; and, on the other hand, with a second data port RdData, controlled for reading only and acting as output from the delaying device, with a first address input RdAddr associated to it. Memory RAM is chosen with a number $N$ of memory locations equal at least to the (virtual) number of taps to the nominal FIR filter.

The clocking for memory reading and writing is provided by a modulo-N counter Cont, driven by a clock signal Ck. Counter Cont directly controls writing to WrAddr, while it controls reading to RdAddr after an offset, consisting of the desired delay value, has been subtracted from it in adder S.

It can therefore be appreciated that, due to the modulo-M counting, the above device behaves as a circular buffer where the samples are written to successive locations, while, due to the reading offset, the delayed sample is output at each clock cycle.

Persons skilled in the art will appreciate that several equivalent versions can be made of the diagram as shown. For instance, instead of the Dual-Port RAM a single-port memory might be used, where writing and reading are alternated at double rate, or an equivalent result might also be achieved by use of FIFO memories.

## Claims

1. A process for cancelling the reentry signal in a gapfiller-type relay station for broadcasting networks using single-frequency, OFDM-type transmission systems, having a receiving antenna, an amplification chain and a transmitting antenna, wherein the amplification chain is fed back by a digital filter with controllable frequency response ($W(f)$), the channel transfer function for each OFDM symbol is estimated and the filter transfer function is controlled so that the distorsions of the signal broadcast by the transmitting antenna are minimized,
   **<u>characterized in that</u>** it comprises the following steps:

   performing a preliminary procedure in which the relay's transmitting antenna is kept inactive while only keeping the receiving antenna active,

   monitoring the signal at the estimation point,

   deriving an estimation of the transfer function of the multiple paths reaching the receiver in addition to the main path signal by computing

$$H_e(f) = F_0(f) - 1$$

where $F_0(f)$ is the channel frequency response, and
activating the transmitting antenna of the relay station, whereby the FIR cancelling filter is initialized with the function $W_0(f) = F_0(f) - 1$.

2. The process of claim 1, **characterized in that** said preliminary procedure is terminated after a predefined number of OFDM symbols.

3. The process of claim 1, **characterized in that** said preliminary procedure consists in iteratively repeating the evaluation of the frequency error at generic step $i$ as

$$Er_0(n_i,k) = F_0(n_{i-1},k)-1$$

and using such error for updating the filter's frequency response at each fresh symbol $n_i$, based on the equation

$$W(n_i,k) = W(n_{i-1},k) + \mu \cdot Er(n_i,k)$$

and taking its inverse Fourier transform to obtain the coefficients $c_i$ of the FIR cancelling filter according to the equation

$$c_i = w(n_i,i) = w(n_{i-1},i) + \mu \cdot er(n_i,i) \qquad \text{with } i = 0, ..., N\text{-}1.$$

4. The process of claim 3, **characterized in that** said iterative preliminary procedure is terminated when the maximum of the error function $Er(n_i,k)$ has become lower than a predetermined threshold.

5. The process of any of claims 1 to 4, **characterized in that** at the end of said preliminary procedure the transmitting antenna is also activated, while allowing the amplification of the stage driving the transmitting antenna to increase from 0 to a final predetermined value over a predetermined number of symbols.

6. A process for cancelling the reentry signal in a gapfiller-type relay station for broadcasting networks using single-frequency, OFDM-type transmission systems, having a receiving antenna, an amplification chain and a transmitting antenna, wherein the amplification chain is fed back by a digital filter with controllable frequency response ($W(f)$), the channel transfer function for each OFDM symbol is estimated and the filter transfer function is controlled so that the distorsions of the signal broadcast by the transmitting antenna are minimized, **characterized in that** it comprises the following steps:

locating the main echoes in the reentry signal by evaluating the maxima in the estimated error function ($er(t)$) having an amplitude larger than a predetermined threshold, such that the echoes below said threshold do not affect the system's performance, and

determining the transfer function of the filter by using only the contributions of said located maxima plus a predetermined number of lateral samples.

7. The process of claim 6, **characterized in that** in order to locate said maxima higher than a predetermined threshold the following steps are performed:

a) searching for the absolute maximum of the module of er(t) in a time slot equal to the delay of the longest echo that it is desired to cancel; and, if the maximum found has an amplitude larger than said predetermined threshold, storing the echo's estimated position $\tau_s$ and complex amplitude $A_s e^{j\theta s}$; and

b) for each stored echo, evaluating a residue function ($res_s(t)$) by subtracting from the error function ($er(t)$)

thus computed the expression

$$A_s e^{j\theta_{si}} \text{Sinc}[B \cdot (t - \tau_s)]$$

where B is the signal bandwidth,

c) repeating steps a) and b) to search for the next maximum, and

d) terminating the procedure when a maximum below said threshold is found.

8. An apparatus for cancelling the reentry signal in a gapfiller-type relay station for single-frequency, OFDM-type transmission systems, having a receiving antenna, an amplification chain and a transmitting antenna, a digital filter with controllable frequency response ($W(f)$) connected to feedback the amplification chain, and a circuit for estimating the transfer function of the channel at each OFDM symbol and connected to control the transfer function of the filter by the process according to claim 6 or 7, **characterized in that** the cancellation filter comprises a plurality of alternatingly cascaded FIR filters.

9. The cancellation apparatus of claim 8, **characterized in that** each variable-delay delaying device comprises a random access memory where the signal samples are written in successive locations and simultaneously read from locations that are offset from the writing locations by an offset corresponding to the desired delay.

10. The cancellation apparatus of claim 9, **characterized in that** said random access memory is a memory with two data ports, the samples to be written to memory being applied to one of said ports with a writing address supplied by a counter, and the samples to be emitted as outputs being read from the other of said ports with a reading address obtained by subtracting the desired value of the delay from the output of the counter.

Figura 1

Figura 2

Figura 3

Figura 4

Figura 5

Figura 7

Figura 6